# EUROPÄISCHE PATENTSCHRIFT

(11) **EP 0 365 937 B1**
(45) Veröffentlichungstag und Bekanntmachung des Hinweises auf die Patenterteilung: **14.04.1993**
(21) Anmeldenummer: 89119034.0
(22) Anmeldetag: 13.10.1989
(51) Int. Cl.: B60Q 1/26

(54) **Fahrzeug, wie Einsatzfahrzeug**
Vehicle, such as an intervention vehicle
Véhicule du type véhicule d'intervention

(30) Priorität: 26.10.1988 DE 8813407 U; 11.11.1988 DE 8814151 U
(43) Veröffentlichungstag der Anmeldung: 02.05.1990
(73) Patentinhaber: METZ FEUERWEHRGERÄTE GMBH, D-76185 Karlsruhe (DE)
(72) Erfinder: Lang, Dieter, D-6301 Pohlheim (DE)
(74) Vertreter: Lempert, Jost, Dipl.-Phys. Dr. rer.nat.

(56) Entgegenhaltungen:
- DE-A- 1 455 597
- FR-A- 1 071 787
- GB-A- 2 041 430
- US-A- 3 143 722
- US-A- 4 259 660
- US-A- 4 835 515

## Beschreibung

Die Erfindung betrifft ein Fahrzeug, wie Einsatzfahrzeug, mit Leuchteinrichtungen aufweisenden Klappen im oberen seitlichen Bereich.

Es ist schon ein Einsatzfahrzeug mit einer geschlossenen Dachreeling vorgeschlagen worden, die in Form gestreckter seitlicher Kästen oder Gehäuse auch im Fahrzeugbau ausgebildet ist und die an ihrer Außenseite um eine Schwenkachse verschwenkbare und zu öffnende Klappen aufweist, unter denen zur Beleuchtung des Umfeldes des Einsatzfahrzeugs bei Dunkelheit Leuchteinrichtungen angeordnet sind. Diese Umfeldbeleuchtung dient dazu, die Umgebung dem Fahrzeugs zu beleuchten, so daß einerseits Gerätschaften etc. leicht aufgefunden und nach Abschluß des Einsatzes auch nicht übersehen und vergessen werden.

Nun steht, insbesondere bei Dunkelheit, nicht aufgrund der Eilbedürftigkeit des Handelns die Zeit zur Verfügung, neben einer Vielzahl sonstiger Handgriffe, wie Öffnen des Geräteraums, Entnehmen von Geräte, Einschalten sonstiger Beleuchtungen etc., noch die Klappen von Hand zu öffnen und deren Beleuchtung separat einzuschalten.

Anzeigeeinrichtungen, bei denen beim Aufstellen eine Stromversorgung geschaltet wird, sind an sich bekannt (GB-A-20 41 430, US-A-4 259 660, FR-A-10 71 787).

Der Erfindung liegt daher die Aufgabe zugrunde, einen gattungsgemäßes Fahrzeug und insbesondere dessen Umfeldbeleuchtung dahingehend weiterzuentwickeln, daß bei Dunkelheit ein separater Handgriff zum Einschalten der Umfeldbeleuchtung nicht erforderlich ist und insbesondere die gesamte Umfeldbeleuchtung zusammen mit dem Einschalten sonst notwendiger elektrischer Verbraucher erfolgt.

Erfindungsgemäß wird die genannte Aufgabe zunächst bei einem gattungsgemäßen Fahrzeug der eingangs genannten Art dadurch gelöst, daß die Klappen über eine Ventileinrichtung elektropneumatisch angetrieben sind; daß ein Schalter der Ventileinrichtung im Stromkreis einer sonstigen Beleuchtungseinrichtung des Fahrzeugs angeordnet ist und daß an den Klappen mit den Leuchteinrichtungen verbundene Endschalter angeordnet sind, durch welche die Leuchteinrichtungen schaltbar sind. Hierdurch kann die üblicherweise vorhandene Pneumatik des Fahrzeugs zum Antrieb der Klappen genutzt werden.

Gemäß bevorzugter Ausgestaltung kann vorgesehen sein, daß der Stromkreis einer Beleuchtungseinrichtung des Fahrzeugs durch einen durch eine Verschließeinrichtung beaufschlagten Schalter schaltbar ist oder ein Schalter der Ventileinrichtung durch eine Verschließeinrichtung des Fahrzeugs schaltbar ist, wobei derartige Verschließeinrichtungen in der Regel, wenn auch nicht notwendigerweise, bei solchen Fahrzeugen als Rolläden ausgebildet sind.

Hier werden nicht nur die Klappen geöffnet, sondern auch die Beleuchtungseinrichtung an den Klappen automatisch zusammen mit dem Einschalten eines sonstigen elektrischen Verbrauchers, wie sonstiger Beleuchtungseinrichtungen, eingeschaltet. In weiterer bevorzugter Ausgestaltung ist vorgesehen, daß die Klappen über pneumatische Doppelzylinder angetrieben sind und daß der Schalter der Ventilanordnung ein elektromagnetisches Steuerventil ist. Eine andere Ausgestaltung sieht vor, daß die Leuchteinrichtungen an den Klappen Leuchtstoffröhren sind.

Alternativ kann weiterhin vorgesehen sein, daß die Endschalter an der Klappe selbst befestigt sind oder aber, daß die Endschalter an einem fahrzeugfesten Gehäuse im Bereich der sich schließenden Klappe befestigt sind.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:
- Figur 1: Ein erfindungsgemäß ausgestaltetes Fahrzeug in Rückansicht;
- Figur 2: das erfindungsgemäß ausgestaltete Fahrzeug in Seitenansicht;
- Figur 3: eine vergrößerte Darstellung der Einrichtung zur Umfeldbeleuchtung; und
- Figur 4: die Schaltanordnung zum Einschalten der Umfeldbeleuchtung.

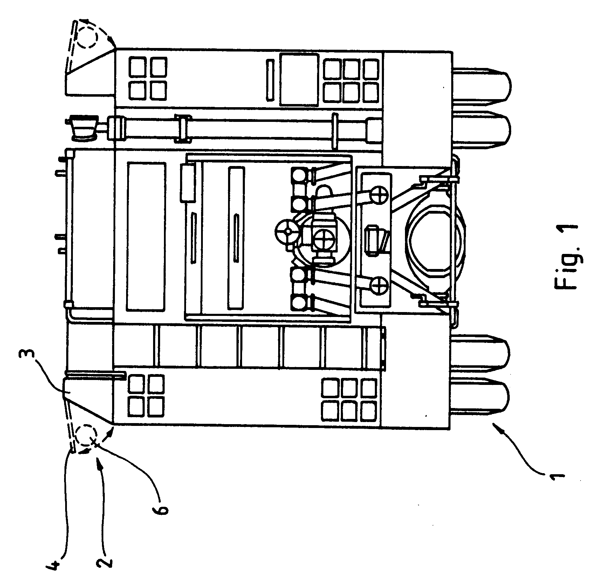

Das erfindungsgemäß ausgestaltete Fahrzeug 1 ist in der dargestellten Ausführungsform ein Feuerwehrfahrzeug mit Kastenaufbau. Im seitlichen oberen Bereich 2 des Fahrzeugs ist beidseitig eine kastenartige Reeling 3 ausgebildet, die an ihrer Außenseite eine aufklappbare Klappe 4 aufweist, an der eine Leuchteinrichtung 6, insbesondere eine Leuchtstoffröhre angeordnet ist (Figur 1).

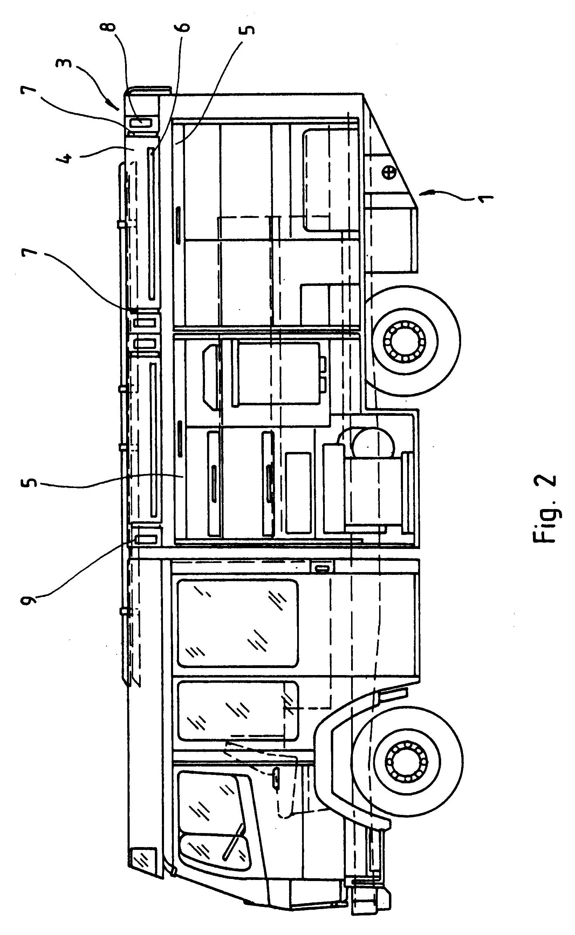

Im seitlichen Bereich der Klappen sind weiterhin Endschalter 9 vorgesehen, mittels derer die Leuchteinrichtungen 6 beim Öffnen der Klappe 4 ein- und beim Schließen derselben ausgeschaltet werden (Figur 2).

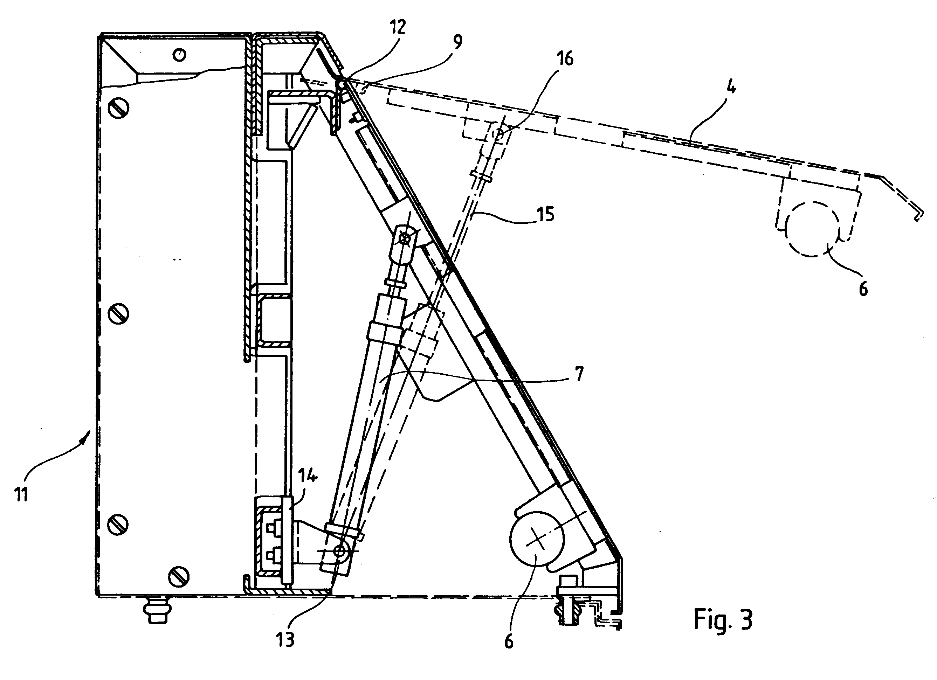

Die geschlossene Reelinganordnung 3 ist in der Figur 3 im Detail dargestellt. Sie weist ein Gehäuse 11 auf, das allseitig geschlossen und nach außen hin durch die Klappe 4 verschließbar und zu öffnen ist. An der Klappe 4 ist die Leuchteinrichtung 6 in Form einer Leuchtstoffröhre angeordnet. Die Klappe 4 ist um eine Achse 12 verschwenkbar. Sie wird, wie gesagt, mittels pneumatischen Zylindern 7 geöffnet und geschlossen. Der Zylinder 7 ist an einer Lasche 13 an der inneren Rückwand 14 des Gehäuses gelenkig angelenkt. Sein Kolben 14 ist an einer Lasche 16 an der Klappe 4 angelenkt. Die Klappe 4 ist zwischen der in Figur 3 durchgezeichneten Schließstellung und der gestrichelt gezeichneten Öffnungsstellung verschwenkbar. Weiterhin ist der Endschalter 9 an der Klappe 4 erkennbar, der beim Schließen der Klappe an einem Gehäuseteil zur Anlage kommt und den Stromweg zur Leuchteinrichtung 6 unterbricht, während er beim Öffnen der Klappe den Stromweg schließt. Der Endschalter 9 könnte auch ebenfalls am Gehäuse direkt angebracht sein.

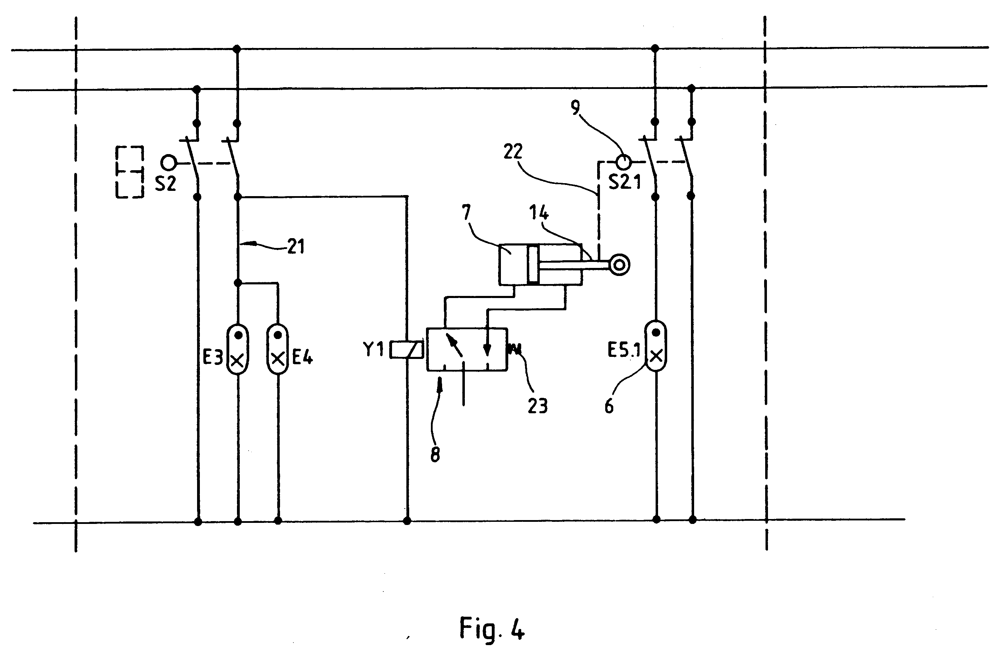

Die Schaltung ist in der Figur 4 dargestellt. Im Stromweg 21 von elektrischen Verbrauchern, wie Leuchteinrichtungen E3, E4, die durch einen Schalter S2 geschaltet werden, ist der Schalter Y1 für die Ventilanordnung 8 des Doppelzylinders 7, der an der Klappe 4 (hier nicht dargestellt) angreift, angeordnet, insbesondere zu den Innenraumbeleuchtungen E3, E4 parallelgeschaltet. Weiterhin ist der Endschalter 9 (hier zusätzlich mit S2.1 bezeichnet) dargestellt, der aufgrund der Position der Klappe 4 - bzw. der Zylinder-Kolben-Anordnung 7,14, was hier durch die gestrichelte Verbindung 22 angedeutet ist - die Leuchtanordnung 6 (E5.1) der Klappen 4 für das Umfeld ein- bzw. ausschaltet (Figur 4).

Wenn das Einsatzfahrzeug zu seinem Einsatzort kommt, werden in an sich bekannter Weise die Innenraumleuchten E3, E4 des Fahrzeugs durch an Verschließeinrichtungen 5, wie Rolläden, befindliche Tür-Kontaktschalter eingeschaltet, worauf der Schalter Y1 die Ventilanordnung 8 in ihre den Kolben 14 des Zylinders 7 ausfahrende und damit die Klappe 4 öffnende Position schaltet. Der Kontaktschalter ist in der Regel noch in Reihe zu einem Schalter für das Standlicht des Fahrzeugs geschaltet. Der Schalter Y1 kann ein elektropneumatisches Steuerventil sein. Durch das Öffnen der Klappe 4 wird der Endschalter 9 (S2. 1) betätigt, der die Stromverbindung zu den Umfeld-Leuchteinrichtungen 6 (E5.1), also den Leuchtröhren an der Klappe 4, betätigt, wodurch diese das Umfeld beleuchten können. Beim Ausschalten des Schalters S2 fällt der Schalter Y1 ab und das Ventil 8 wird, gegebenenfalls unter Wirkung einer Feder 23, in seine den Kolben 14 in den Zylinder 7 zurückdrückende Position geschaltet, wodurch die Klappe 4 geschlossen, der Endschalter 9 wieder betätigt und damit die Leuchteinrichtung 6 ausgeschaltet wird. Durch die erfindungsgemäße Ausgestaltung kann sowohl das Öffnen der Klappe als auch das Einschalten der an ihr angeordneten Leuchteinrichtung zu sammen mit dem Einschalten anderer Verbraucher durch einen einzigen Schaltvorgang ausgeführt werden.

## Patentansprüche

1. Fahrzeug, wie Einsatzfahrzeug, mit Leuchteinrichtungen aufweisenden Klappen im oberen seitlichen Bereich, dadurch gekennzeichnet, daß die Klappen (4) über eine Ventileinrichtung (8) elektropneumatisch angetrieben sind; daß ein Schalter (Y1) der Ventileinrichtung (8) im Stromkreis einer sonstigen Beleuchtungseinrichtung (E1, E2) des Fahrzeugs (1) angeordnet ist und daß an den Klappen (4) mit den Leuchteinrichtungen (6) verbundene Endschalter (9) angeordnet sind, durch welche die Leuchteinrichtungen (6) schaltbar sind.

2. Fahrzeug nach Anspruch 1, dadurch gekennzeichnet, daß der Stromkreis einer Beleuchtungseinrichtung (E1, E2) des Fahrzeugs (1) durch einen durch eine Verschließeinrichtung (5) beaufschlagten Schalter (S2) schaltbar ist.

3. Fahrzeug nach Anspruch 1, dadurch gekennzeichnet, daß ein Schalter (Y1) der Ventileinrichtung (8) durch eine Verschließeinrichtung (5) des Fahrzeugs (1) schaltbar ist.

4. Fahrzeug nach einem der Ansprüche 1 bis 3, dadurch gekennzeichnet, daß die Klappen (4) über pneumatische Doppelzylinder (7) angetrieben sind.

5. Fahrzeug nach einem der Ansprüche 1 bis 4, dadurch gekennzeichnet, daß der Schalter (Y1) der Ventilanordnung (8) ein elektropneumatisches Steuerventil ist.

6. Fahrzeug nach einem der vorangehenden Ansprüche, dadurch gekennzeichnet, daß die Leuchteinrichtungen (6) an den Klappen (4) Leuchtstoffröhren sind.

7. Fahrzeug nach einem der vorangehenden Ansprüche, dadurch gekennzeichnet, daß die Endschalter (9) an der Klappe (4) selbst befestigt sind.

8. Fahrzeug nach einem der Ansprüche 1 bis 6, dadurch gekennzeichnet, daß die Endschalter (9) an einem fahrzeugfesten Gehäuse im Bereich der sich schließenden Klappe (4) befestigt sind.

## Claims

1. Vehicle, such as an intervention vehicle, with flaps having lighting devices in the upper, lateral area, characterized in that the flaps (4) are electropneumatically driven by means of a valve mechanism (8), that a switch (Y1) of the valve mechanism (8) is positioned in the circuit of another lighting device (E1,E2) of the vehicle (1) and that on the flaps (4) are positioned limit switches (9) connected to the lighting devices (6) through which the latter can be switched.

2. Vehicle according to claim 1, characterized in that the circuit of a lighting device (E1,E2) of the vehicle (1) can be switched by a switch (S2) subject to the action of a closing device (5).

3. Vehicle according to claim 1, characterized in that a switch (Y1) of the valve mechanism (8) is switchable by a closing device (5) of the vehicle (1).

4. Vehicle according to one of the claims 1 to 3, characterized in that the flaps (4) are driven by means of pneumatic double cylinders (7).

5. Vehicle according to one of the claims 1 to 4, characterized in that the switch (Y1) of the valve mechanism (8) is an electropneumatic control valve.

6. Vehicle according to one of the preceding claims, characterized in that the lighting devices (6) on the flaps (4) are fluorescent tubes.

7. Vehicle according to one of the preceding claims, characterized in that the limit switches (9) are fixed to the flap (4).

8. Vehicle according to one of the claims 1 to 6, characterized in that the limit switches (9) are fixed to a vehicle-fixed casing in the vicinity of the closing flap (4).

## Revendications

1. Véhicule du type véhicule d'intervention, présentant au niveau de sa partie supérieure latérale des volets munis de dispositifs d'éclairage, caractérisé en ce que les volets (4) sont actionnés électropneumatiquement par l'intermédiaire d'un dispositif à soupape (8), en ce qu'un interrupteur (Y₁) du dispositif à soupape (8) est installé dans le circuit d'un autre dispositif d'éclairage (E₁ E₂) du véhicule (1), et en ce que des interrupteurs de fin de course (9) reliés aux dispositifs d'éclairage (6) sont installés sur les volets (4), les dispositifs d'éclairage (6) étant commandés par l'intermédiaire de ces interrupteurs de fin de course (9).

2. Véhicule selon la revendication 1, caractérisé en ce que le circuit d'un dispositif d'éclairage (E₁ E₂) du véhicule (1) est commandé par un interrupteur (S2) actionné par un dispositif de fermeture (5).

3. Véhicule selon la revendication 1, caractérisé en ce qu'un interrupteur (Y₁) du dispositif à soupape (8) est commandé par un dispositif de fermeture (5) du véhicule (1).

4. Véhicule selon l'une des revendications 1 à 3, caractérisé en ce que les volets (4) sont actionnés par l'intermédiaire de doubles vérins pneumatiques (7).

5. Véhicule selon l'une des revendications 1 à 4, caractérisé en ce que l'interrupteur (Y₁) du dispositif à soupape (8) est une soupape de commande électropneumatique.

6. Véhicule selon l'une quelconque des revendications précédentes, caractérisé en ce que les dispositifs d'éclairage (6) sur les volets (4) sont des tubes fluorescents.

7. Véhicule selon l'une quelconque des revendications précédentes, caractérisé en ce que les interrupteurs de fin de course (9) sont fixés sur le volet (4) lui-même.

8. Véhicule selon l'une des revendications 1 à 6, caractérisé en ce que les interrupteurs de fin de course (9) sont fixés sur un boîtier solidaire du véhicule au niveau de l'emplacement du volet (4) lorsque celui-ci vient en position fermée.
